# EUROPEAN PATENT APPLICATION

(11) **EP 4 199 319 A1**
(43) Date of publication of application: **21.06.2023**
(21) Application number: 21917003.2
(22) Date of filing: 31.05.2021
(51) Int. Cl.: H02K 7/00

(54) **ROTOR STRUCTURE FOR REDUCING OPERATING TEMPERATURE IN SHAFT**

(30) Priority: 05.01.2021 CN 202120011514 U
(71) Applicant: Jing-Jin Electric Technologies Co., Ltd., Beijing 100015 (CN)
(72) Inventor: JIN, Haitao, Beijing 100015 (CN); LV, Ya, Beijing 100015 (CN); LIU, Chuankang, Beijing 100015 (CN); ZHOU, Dongsheng, Beijing 100015 (CN); FAN, Huiyan, Beijing 100015 (CN)
(74) Representative: Tana, Maria Gabriella
(86) International application number: PCT/CN2021/097172
(87) International publication number: WO 2022/147954

(57) **Abstract**

A rotor structure for reducing a working temperature in a shaft is disclosed. The rotor structure comprises a hollow shaft body (1) and an inner shaft sleeve (2), the inner shaft sleeve (2) is assembled in the hollow shaft body (1), and a first thermal insulating cavity (3) is formed between the inner shaft sleeve (2) and the hollow shaft body (1). The rotor structure according to the present disclosure can be applied to the motor, and can effectively reduce the working temperature of the inner surface of the hollow shaft of the motor and ensure the reliable operation of the motor.

## Description

### TECHNICAL FIELD

The present disclosure belongs to the technical field of rotor structure design, and particularly relates to a rotor structure for reducing a working temperature in a shaft.

### BACKGROUND

When a motor is working, it will generate heat. The heat generation will be more serious especially when the air gap between the stator and rotor is small, the power voltage is higher, or the bearings works in an abnormal state, etc. If the motor works in a harsh environment for a long time, the heat cannot be dissipated in time, and the motor may not work normally. Moreover, if the temperature inside the rotor is too high, the permeability will drop, which will adversely affect the torque output of the motor.

### SUMMARY

In view of the above problems, the present disclosure provides a motor rotor structure that can reduce the working temperature in the shaft to overcome the above problems or at least partially solve the above problems.

To achieve the object, the present disclosure adopts the following technical solutions.

An aspect of the present disclosure provides a rotor structure for reducing a working temperature in a shaft, wherein the rotor structure comprises a hollow shaft body and an inner shaft sleeve, the inner shaft sleeve is assembled in the hollow shaft body, and a first thermal insulating cavity is formed between the inner shaft sleeve and the hollow shaft body.

Optionally, the first thermal insulating cavity is in a vacuum state, filled with air or filled with a thermal insulating medium.

Optionally, the hollow shaft body and/or the inner shaft sleeve are/is (a) cylindrical hollow structure(s).

Optionally, ends of the hollow shaft body and ends of the inner shaft sleeve are sealedly connected therebetween.

Optionally, the sealed connection is interference fit, welding or threaded connection.

Optionally, the hollow shaft body and the inner shaft sleeve are made of metallic or non-metallic materials.

The present disclosure also provides another rotor structure for reducing a working temperature in a shaft, wherein the rotor structure comprises a hollow shaft body and a rotor iron core, the rotor iron core is sleeved on the hollow shaft body, and a second thermal insulation cavity is formed between the rotor iron core and the hollow shaft body.

Optionally, the second thermal insulating cavity is in a vacuum state, filled with air or filled with a thermal insulating medium; and
the second thermal insulating cavity is formed by a groove structure provided on an inner surface of the rotor iron core and/or an outer surface of the hollow shaft body.

Optionally, the hollow shaft body and the rotor iron core are coupled through multiple keys to transmit torque.

The present disclosure also provides still another rotor structure for reducing a working temperature in a shaft, wherein the rotor structure comprises a hollow shaft body, an inner shaft sleeve and a rotor iron core, the inner shaft sleeve is assembled in the hollow shaft body, and the rotor iron core is sleeved on the hollow shaft body;
a first thermal insulating cavity is formed between the inner shaft sleeve and the hollow shaft body; and
a second thermal insulating cavity is formed between the rotor iron core and the hollow shaft body.

The advantages and beneficial effects of the present disclosure are as follows.

The rotor structures are applied to the motor. By providing the first and/or second thermal insulating cavity, the working temperature of the inner surface of the hollow shaft of the motor can be effectively reduced, thereby ensuring the reliable operation of the motor.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a structural schematic view of a rotor structure for reducing a working temperature in a shaft according to an embodiment of the present disclosure;
FIG. 2 is a partial enlarged structural schematic view of a part I in FIG. 1;
FIG. 3 is a structural schematic view of a hollow shaft body according to an embodiment of the present disclosure;
FIG. 4 is a structural schematic view of an inner shaft sleeve according to an embodiment of the present disclosure;
FIG. 5 is a structural schematic view of a rotor structure sleeved with a rotor iron core according to an embodiment of the present disclosure;
FIG. 6 is a structural schematic view of the rotor structure provided with a second thermal insulating cavity shown in FIG. 5;
FIG. 7 is a partial enlarged structural schematic view of a part II in FIG. 6; and
FIG. 8 is a side view of a rotor structure according to an embodiment of the present disclosure.

In the drawings: 1, hollow shaft body; 2, inner shaft sleeve; 3, first thermal insulating cavity; 4, rotor iron core; 5, second thermal insulating cavity; 6, key.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of, rather than all of, the embodiments of the present disclosure. Based on the embodiments in the present disclosure, all other embodiments obtained by those of ordinary skill in the art without paying creative work shall fall within the protection scope of the present disclosure.

It should be understood that the terms "comprise/include", "consist of" or any other variants are intended to cover non-exclusive inclusion, so that the product, apparatus, process or method including a series of elements may not only include those elements, but also include other elements not stated explicitly, or elements inherent to the product, apparatus, process or method. Without more limitations, elements defined by the phrase "comprise/include" or "consist of" does not exclude the case that there are other same elements in the product, apparatus, process or method including the elements.

It should also be understood that, orientation or positional relationship indicated by the terms "upper", "lower", "front", "rear", "left", "right", "top", "bottom", "inner", "outer", etc. are orientation or positional relationship based on the drawings, which are merely for convenience of describing the present disclosure and simplifying the description, rather than indicating or implying that the relevant device, component or structure must have a specific orientation, or must be constructed and operated in a specific orientation, they should not be construed as limiting the present disclosure.

In the present disclosure, unless otherwise expressly specified and defined, the terms "installed", "coupled", "connected", "fixed" and the like should be understood in a broad sense, for example, it may be fixedly connected, or removably connected, or integrally connected; it may also be mechanically connected or electrically connected; it may also be directly connected or indirectly connected through a middleware; it may also be internally communicated or interacted between two components. For a person of ordinary skill in the art, the specific meaning of these terms in the present disclosure should be understood according to specific situations.

The technical solutions provided by the embodiments of the present disclosure are described in detail with the accompanying drawings.

### First Embodiment

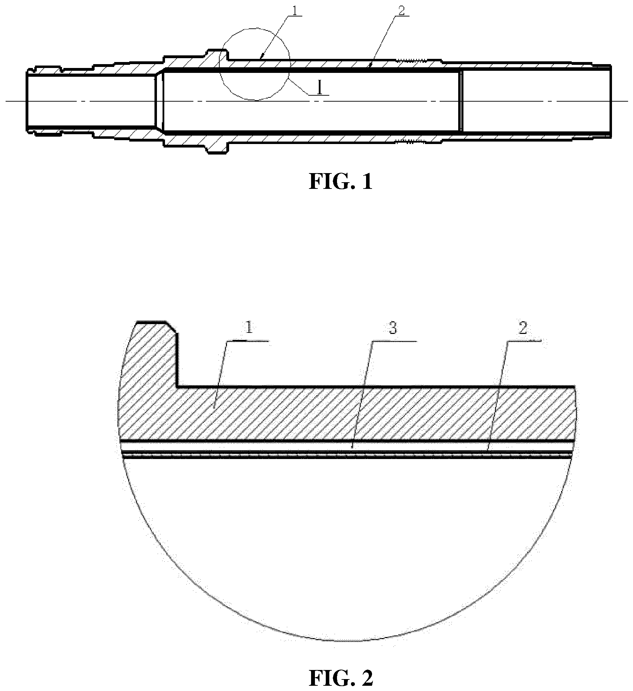

FIG. 1 is a structural schematic view of a rotor structure that can reduce the working temperature in the shaft according to an embodiment of the present disclosure. The rotor structure comprises a hollow shaft body 1 and an inner shaft sleeve 2. The inner shaft sleeve 2 is assembled in the hollow shaft body 1, and a first thermal insulating cavity 3 is formed between the inner shaft sleeve 2 and the hollow shaft body 1, so that the first thermal insulating cavity can be used to prevent the heat outside of the hollow shaft body 1 from transferring into the hollow shaft body 1, thereby reducing the impact on the magnetic conduction of the rotor hollow shaft and the like.

As can be seen from FIG. 2, since the inner diameter of the hollow shaft body 1 is different from the outer diameter of the inner shaft sleeve 2, the first thermal insulating cavity can be formed by the gap between the hollow shaft body 1 and the inner shaft sleeve 2. Of course, it can also be formed by a groove on an inner surface of the hollow shaft body 1 and/or a groove on an outer surface of the inner shaft sleeve 2, which is not specifically limited herein.

In an embodiment, the first thermal insulating cavity 3 is in a vacuum state, filled with ordinary air or filled with a thermal insulation medium. The thermal insulation medium may be inert gas, liquid or solid material that have a low thermal conductivity. The specific volume and filling material are not specifically limited here.

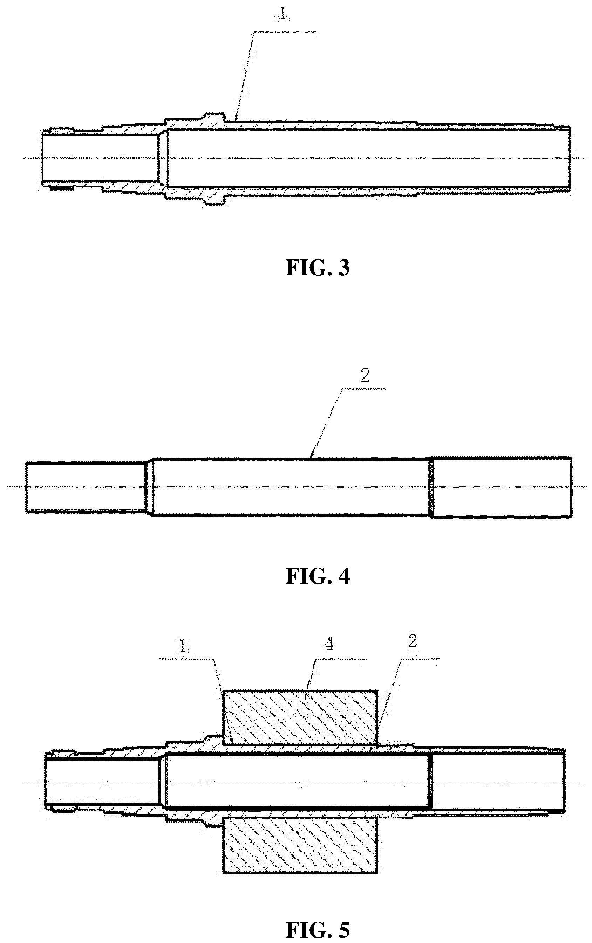

In an embodiment, referring to FIG. 3 and FIG.4, the hollow shaft body 1 and/or the inner shaft sleeve 2 are/is (a) cylindrical hollow shaft(s). Of course, the structure of the hollow shaft body and the inner shaft sleeve may also be other similar structures such as hollow polygonal prisms with momentum balance.

In an embodiment, in order to maintain the vacuum state or prevent the thermal insulating medium in the first thermal insulating cavity 3 from leaking out and polluting the motor and reducing the thermal insulation effect, ends of the hollow shaft body and ends of the inner shaft sleeve are sealedly connected therebetween. The specific form of the sealed connection may not be limited.

Preferably, the sealed connection is any one of the following: interference fit, welding, or threaded connection with an end cover. The purpose is to block the communication between the thermal insulating cavity and the external space.

In an embodiment, the hollow shaft body 1 and the inner shaft sleeve 2 are made of metallic or non-metallic materials. The specific selection of metallic and non-metallic materials is not specifically limited, as long as the strength and hardness requirements are met.

### Second Embodiment

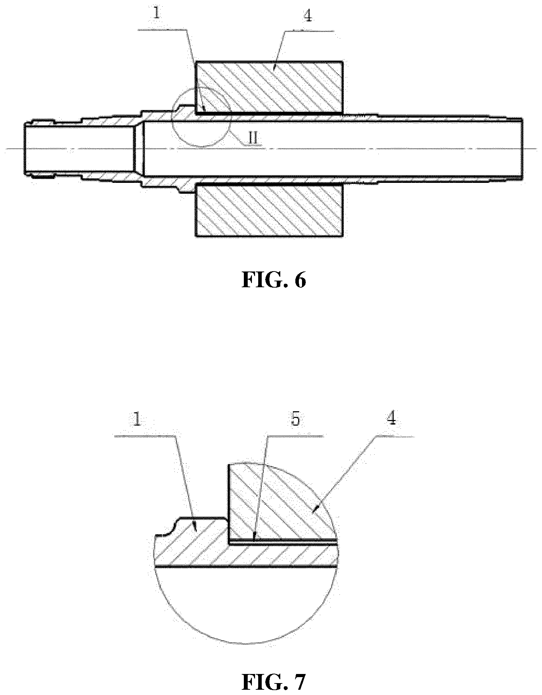

Referring to FIG. 5 to FIG.7, the rotor structure in this embodiment comprises a hollow shaft body 1 and a rotor iron core 4. The rotor iron core 4 is sleeved on the hollow shaft body 1. One end of the rotor iron core is fixed by a stepped shaft on the hollow shaft body 1, and the other end may be fixed by welding, knurling, gluing or setting a flexible sleeve. The key point is that, referring to FIG. 6 and FIG. 7, in order to further improve the thermal insulation effect and avoid the heat transfer between the rotor iron core and the hollow shaft body, a second thermal insulation cavity 5 is formed between the rotor iron core and the hollow shaft body.

In an embodiment, for the same reason as the first thermal insulating cavity, the second thermal insulating cavity 5 is in a vacuum state, filled with air or filled with a thermal insulating medium.

In an embodiment, the second thermal insulating cavity 5 is formed by a groove structure provided on an inner surface of the rotor iron core 4 and/or an outer surface of the hollow shaft body 1. Of course, it may also be formed by a gap formed due to the difference of radius.

For other settings of the second thermal insulating cavity, please refer to the setting of the first thermal insulating cavity in the first embodiment.

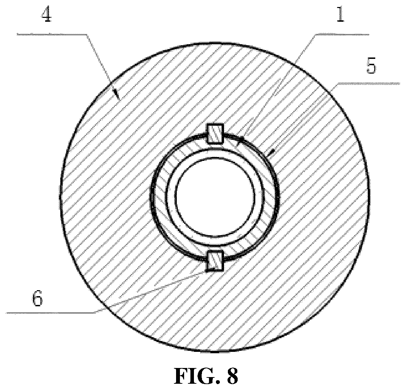

It should be pointed out that, referring to FIG. 8, the hollow shaft body and the rotor iron core are coupled through multiple keys 6 to transmit torque. The number of keys may be two, three, four, etc., which are preferably uniformly arranged on the circumferential surface between the rotor iron core 4 and the hollow shaft body 1.

### Third Embodiment

The third embodiment is the combination of the first embodiment and the second embodiment. The rotor structure for reducing the working temperature in the shaft in this embodiment comprises a hollow shaft body 1, an inner shaft sleeve 2 and a rotor iron core 4. The inner shaft sleeve 2 is assembled in the hollow shaft body 1, and the rotor iron core 4 is sleeved on the hollow shaft body 1. A first thermal insulating cavity 3 is formed between the inner shaft sleeve 2 and the hollow shaft body 1. A second thermal insulating cavity 5 is formed between the rotor iron core 4 and the hollow shaft body 1. The thermal insulation effect is further improved by providing two thermal insulating cavities.

For the specific settings of the first and second thermal insulating cavities, please refer to the first embodiment and the second embodiment, which will not be repeated here.

The above only describes the embodiments of the present disclosure and is not intended to limit the scope of protection of the present disclosure. Any modification, equivalent replacement, improvement, expansion, etc. made within the spirit and principle of the present disclosure shall all be included in the protection scope of the present disclosure.

## Claims

1. A rotor structure for reducing a working temperature in a shaft, wherein the rotor structure comprises a hollow shaft body (1) and an inner shaft sleeve (2), the inner shaft sleeve (2) is assembled in the hollow shaft body (1), and a first thermal insulating cavity (3) is formed between the inner shaft sleeve (2) and the hollow shaft body (1).

2. The rotor structure according to claim 1, wherein the first thermal insulating cavity (3) is in a vacuum state, filled with air or filled with a thermal insulating medium.

3. The rotor structure according to claim 1, wherein the hollow shaft body (1) and/or the inner shaft sleeve (2) are/is (a) cylindrical hollow structure(s).

4. The rotor structure according to any one of claims 1-3, wherein ends of the hollow shaft body (1) and ends of the inner shaft sleeve (2) are sealedly connected therebetween.

5. The rotor structure according to claim 4, wherein the sealed connection is interference fit, welding or threaded connection.

6. The rotor structure according to any one of claims 1-3, wherein the hollow shaft body (1) and the inner shaft sleeve (2) are made of metallic or non-metallic materials.

7. A rotor structure for reducing a working temperature in a shaft, wherein the rotor structure comprises a hollow shaft body (1) and a rotor iron core (4), the rotor iron core (4) is sleeved on the hollow shaft body (1), and a second thermal insulation cavity is formed between the rotor iron core (4) and the hollow shaft body (1).

8. The rotor structure according to claim 7, wherein the second thermal insulating cavity (5) is in a vacuum state, filled with air or filled with a thermal insulating medium; and
the second thermal insulating cavity (5) is formed by a groove structure provided on an inner surface of the rotor iron core (4) and/or an outer surface of the hollow shaft body (1).

9. The rotor structure according to claim 7 or 8, wherein the hollow shaft body (1) and the rotor iron core (4) are coupled through multiple keys (5) to transmit torque.

10. A rotor structure for reducing a working temperature in a shaft, wherein the rotor structure comprises a hollow shaft body (1), an inner shaft sleeve (2) and a rotor iron core (4), the inner shaft sleeve (2) is assembled in the hollow shaft body (1), and the rotor iron core (4) is sleeved on the hollow shaft body (1);
a first thermal insulating cavity (3) is formed between the inner shaft sleeve (2) and the hollow shaft body (1); and
a second thermal insulating cavity (5) is formed between the rotor iron core (4) and the hollow shaft body (1).
